# EUROPEAN PATENT SPECIFICATION

(11) **EP 0 630 194 B1**
(45) Date of publication and mention of the grant of the patent: **06.08.1997**
(21) Application number: 93906204.8
(22) Date of filing: 23.02.1993
(51) Int. Cl.: A23L 2/38, A23L 1/308, A23L 1/0526

(54) **UNFLAVORED PSYLLIUM DRINK MIX COMPOSITIONS**
PSYLLIUM ENTHALTENDE ZUSAMMENSTELLUNGEN FÜR GETRÄNKE OHNE GESCHMACKSTOFFE
COMPOSITIONS DE MELANGES POUR BOISSON A BASE DE PSYLLIUM SANS AROME

(30) Priority: 11.03.1992 US 849263
(43) Date of publication of application: 28.12.1994
(73) Proprietor: THE PROCTER & GAMBLE COMPANY, Cincinnati, Ohio 45202 (US)
(72) Inventor: TSE, Hing, Cheung, Fairfield, OH 45014 (US); NOLL, Joseph, Clifford, Cincinnati, OH 45211 (US)
(74) Representative: Brooks, Maxim Courtney
(86) International application number: US9301650
(87) International publication number: WO9317590

(56) References cited:
- EP-A- 0 101 891
- EP-A- 0 362 926
- CA-A- 2 030 448
- GB-A- 2 224 628
- US-A- 4 824 672

## Description

### BACKGROUND OF THE INVENTION

The present invention relates to psyllium-containing drink mix compositions comprising acid and base at a level whereby the composition, when combined with water, has a pH of from 5,0 to 8,0. These compositions have little or no flavor impact, to the extent that consumers consider them unflavored, but in spite of the elevated pH still have reduced gellation rates.

Products containing larger particle size psyllium seed husk with citric acid and carbonate salts (e.g., potassium bicarbonate; sodium bicarbonate; and/or calcium carbonate) are known, for example Effervescent Metamucil® sold by The Procter & Gamble Company (Physicians Desk Reference for Nonprescription Drugs, 10th Edition, page 642; copyright 1989). These Metamucil products generate carbon dioxide upon mixing with water, which assists in the mixing process. The level of base in these products, however, is limited such that the pH of the psyllium drink mix suspension is low (about pH 4.5). The resulting product has a distinct tart/sour taste which is compatible with the flavors used (lemon-lime; orange). However it is not suitable for an unflavored version which is desired by certain consumers who wish to choose a wider variety of liquids besides just water for suspending the psyllium husk, for example milk and non-citrus fruit juices, and by consumers who simply prefer a non-flavored drink.

CA-A-2 030 448 describes a psyllium drink mix composition comprising psyllium husk, edible acid and edible base.

US 4,824,672 describes a pharmaceutical composition for use in reducing serum cholesterol levels, which contain gel-forming fibers and a mineral salt.

Through attempts to produce an unflavored drink mix version of smaller particle size psyllium husk, it was realized that while readily mixable and suspendable compositions can be prepared, the rate of gellation for such compositions are unacceptably rapid when the acidic flavoring agents were not included. Reducing this gellation rate is particularly desirable for consumer acceptability when smaller particle size psyllium husk is used in a drink mix composition, for example when preparing small particle size drink mix compositions as described in European Patent Application Publication No. 362,926, published April 11, 1990 by The Procter & Gamble Company.

Thus, there continues to be a need for unflavored psyllium-containing drink mix compositions which have slowed gellation rates relative to the gellation rate of psyllium alone in solution. The present invention compositions satisfy this need. It has surprisingly been discovered by the present invention that increasing the pH of the psyllium-containing drink mix composition not only reduces/eliminates the flavor impact of the composition but still, in spite of the higher pH, does not substantially adversely affect the ability of the acid in these compositions to slow the gellation rate to a rate comparable to substantially more acidic compositions.

An object of the present invention is therefore to provide unflavored psyllium-containing drink mix compositions having acceptable aesthetics, including reduced psyllium gellation rate, good mixability, good suspendability, good taste, and acceptable texture. These and other objects of the present invention will become readily apparent from the detailed description which follows.

All percentages and ratios used herein are by weight, and all measurements made at 25°C, unless otherwise specified. Screen mesh sizes used herein are based on U.S. standards unless otherwise stated.

### SUMMARY OF THE INVENTION

The present invention relates to psyllium-containing drink mix compositions comprising:
(a) from 10% to 99% psyllium husk;
(b) from 0% to 89% carrier materials which are selected from hydrolysed starch oligosaccharide, monosaccharide, disaccharide, polyglucose, polymaltose and mixtures thereof;
(c) from 0.5% to 25% edible acid; and
(d) from 0.5% to 25% edible base at a level relative to the edible acid whereby the drink mix composition, when combined with water, has a pH of from 5,0 to 8,0.

### DETAILED DESCRIPTION OF THE INVENTION

The drink mix compositions of the present invention are psyllium-containing compositions in any form suitable for mixing with a liquid to form a psyllium husk suspension for oral consumption. Preferred form is a dry powder in bulk or unit dose form which readily mixes and disperses in the liquid. The components of the compositions according to the present invention, and representative amounts, are described in detail as follows.

### Psyllium Husk:

The psyllium husk used in the present invention is from psyllium seeds, from plants of the Plantago genus. Various species such as Plantago lanceolate, P. rugelii, and P. major are known. Commercial psyllium husk include the French (black; Plantago indica), Spanish (P. psyllium) and Indian (blonde; P. ovata). Indian (blonde) psyllium husk is preferred for use herein. Also preferred is psyllium husk which is at least 85% pure, more preferably at least 90% pure, and most preferably at least 95% pure.

The psyllium husk is obtained from the seed coat of the psyllium seeds. It is typical to remove the seed coat from the rest of the seed by, for example, slight mechanical pressure, and then to use only the seed coat. The seed coat is preferably removed and sanitized by methods known in the art. Preferred is sanitized psyllium seed husk having substantially intact cell structure, the sanitization having been accomplished by methods such as ethylene oxide sanitization and superheated steam sanitization (as taught in U.S. Patent No. 4,911,889, issued March 27, 1990 to Leland et al.). It is also preferred that the psyllium husk used herein have reduced particle size.

Preferred psyllium husk utilized for compositions of the present invention have a substantial amount of small particle size psyllium husk. Such psyllium husk comprises psyllium husk particle sizes distributed such that more than 90% is smaller than 45 mesh, more preferably more than 80% is smaller than 60 mesh, and most preferably at least 80% is smaller than 80 mesh. Further preferred particle sizes are as follows: less than about 25% larger than 60 mesh, and at least 40% smaller than 80 mesh. More preferred are particle size distribution of: less than 10% larger than 60 mesh, at least 40% within the range of from 80 mesh to 200 mesh, and less than 50% smaller than 200 mesh. Particle sizes and particle size distributions may be readily determined by one of ordinary skill in the art, for example by sieving using an Alpine Laboratory Air Jet Sieve, Type 200 LS (sold by Alpine American Corp., Natick Mass.).

The drink mix compositions contain from 10% to 99%, preferably from 20% to 90%, most preferably from 25% to 75%, of psyllium husk.

### Edible Acids:

The term "edible acids", as used herein, means any water soluble acid material having a pKₐ of less than 5, preferably within the range of from 2 to 5, and is safe for ingestion by humans. Examples of edible acids include, but are not limited to, citric acid, ascorbic acid, malic acid, succinic acid, tartaric acid, phosphoric acid, monopotassium phosphate, and mixtures thereof. Preferred are ascorbic acid, phosphoric acid, malic acid, and citric acid, with citric acid being most preferred.

The compositions of the present invention comprise from 0.5% to 25% edible acid, preferably from 2% to 10%, and more preferably from 2% to 5%. It is to be noted that for purposes of the present invention, it is preferred but not necessary that some or all of the edible acid be coated on the psyllium husk.

### Edible Base:

The term "edible base", as used herein, means any base material having a pKₐ of greater than 7 which will react with the edible acid in water and is safe for ingestion by humans. Examples of edible bases include sodium bicarbonate, sodium carbonate, potassium bicarbonate, potassium carbonate, calcium carbonate, sodium hydroxide, magnesium hydroxide, calcium hydroxide, aluminum hydroxide, dipotassium phosphate, magnesium oxide, magnesium carbonate, and mixtures thereof. Preferred are the carbonate salts, with calcium carbonate being most preferred. Also preferred for the less water soluble bases (i.e., those bases less soluble than about 1g/100 ml water, such as calcium carbonate) is granulating these bases for use in the present compositions.

The compositions of the present invention comprise from 0.5% to 25% edible base, preferably from 1% to 15%, and more preferably from 1% to 10%. It is to be noted for purposes of the present invention that the base must be present in the compositions at a level sufficient to provide a drink mix, when combined with water, having a pH of from 5,0 to 8,0. More preferred is a pH within the range of from 5.5 to 7.0. Because the acid and base interact in the aqueous solution, this pH measurement is the pH of the aqueous drink mix suspension at a time after combining the composition with water when the pH remains constant.

For example, when compositions according to the present invention comprising granulated calcium carbonate (granulated with maltodextrin) and citric acid (in ratio of about 2 equivalents base to 1 equivalent acid) is mixed with water, the pH profile is such that the composition starts out at a pH of about 3.5, increases to pH greater than about 5.0 within a few minutes, and levels off at about 5.5 at about 7 minutes. The gellation rate of such composition, however, is essentially the same as the rate for compositions of substantially lower pH containing citric acid without the base. The acid flavor impact is greatly reduced.

Further, when compositions according to the present invention comprising sodium carbonate and citric acid (again in a ratio of about 2 equivalents base to 1 equivalent acid) is mixed with water, the pH profile is such that the composition starts out at a pH of about 8 and drops within about 2 minutes to level off at a pH of about 6.9-7.0. The gellation rate of such composition is somewhat faster than the rate for compositions of substantially lower pH containing citric acid without the base, but is significantly slower than a composition containing psyllium husk ( no acid or base) mixed with water which has about the same or slightly lower pH than this present invention composition. Again, the acid flavor impact is greatly reduced.

In order to achieve the above-identified pH for the drink mix compositions, it is generally expected that the compositions of the present invention will comprise acid and base in ratios (based on acid/base equivalents) of less than about 2:1 (acid equivalents:base equivalents), preferably less than about 1:1. Ratios of acid:base in the range of about 1:1 to about 1:3 are preferred, with about 1:2 being most preferred.

### Optional Carrier Materials:

Optional carrier materials useful for the compositions of the present invention must be safe for oral administration to humans, and may be chosen by one of ordinary skill in the art as appropriate for the drink mix form and use intended for the product. Psyllium-containing drink mix products, methods for making, and carrier materials useful for these products, are described more fully, for example, in U.S. Patent 4,459,280, to Colliopoulos et al., issued July 10, 1984; U.S. Patent 4,548,806, to Colliopoulos et al., issued October 22, 1985; and U.S. Patent 4,321,263, to Powell et al., issued March 23, 1982, entirety. The drink mix compositions of the present invention comprise from 0% to 89%, preferably from 10% to 80%, and more preferably from 25% to 75%, of carrier materials.

Most preferred are products of the present invention in dry powder form suitable for mixing in a liquid to form a psyllium-containing drink. Preferred carrier materials for such powder forms are known and are also described in detail, for example, in U.S. Patents 4,459,280 and 4,548,860. Preferred are such powders (preferably sugar free) comprising maltodextrin. Also especially preferred are powders comprising agglomerates of psyllium and/or coated psyllium, especially agglomerated with maltodextrin and/or sucrose.

Agglomerating materials preferred for use herein are therefore known. These agglomerating materials include those selected from the group consisting of water dispersible hydrolyzed starch oligosaccharide, mono-saccharide, di-saccharide, polyglucose, polymaltose, and mixtures thereof. Compositions of the present invention preferably comprise from 0.5% to 20% of agglomerating material coating on said psyllium husk, preferably from 1% to 10%, and more preferably from 1% to 5%.

Hydrolysis of starch may be accomplished by a reaction of either acid, enzymes (e.g., alpha-amylase, beta-amylase or amyloglucosidase), or a combination of the two either together or reacted in series. The hydrolysis will follow different pathway depending on whether acids or enzymes are used. The result is a mixture of oligosaccharides which may be separated for their different properties. The resulting separated water dispersible (preferably soluble) hydrolyzed starch oligosaccharides are classified by their reducing sugar content, i.e., the mono- or di-saccharides such as glucose or fructose. The percent reducing sugar content in the particular hydrolyzed starch oligosaccharide is measured on a weight/weight basis as the Dextrose Equivalent (or "D.E."). Hydrolyzed starch oligosaccharides with a D.E. of from 0 to 20 are called maltodextrins. The solid maltodextrins have low to moderate sweetness, low to moderate hygroscopicity, solubility in water and alcohol, and have reduced browning. Above a D.E. of about 20 the hydrolyzed starch oligosaccharides are called syrup solids. The syrup solids are soluble but have a more noticeable sweetness and are more hydroscopic. Above a D.E. of about 30, the syrup solids become less desirable for use herein. A preferred water dispersible hydrolyzed starch oligosaccharide therefore has a D.E. of from about 0 to about 30. A preferred maltodextrin has a D.E. of from about 5 to about 20, more preferably about 10 (i.e., a reducing sugar content ratio of 10% w/w of the oligosaccharide).

The mono-saccharides are those carbohydrates that in general are aldehyde-alcohols or ketone alcohols that are a hexose or pentose and have a sweet taste. They are readily soluble in water and form crystal line solids. Examples of the di-saccharides are those carbohydrates which yield two mono-saccharides on hydrolysis. Examples of di-saccharides are lactose, sucrose and maltose.

As noted hereinbefore, preferred compositions of the present invention are those which have some or all of the edible acid coated on the psyllium husk, and further preferably such that the psyllium husk is agglomerated. Preferred single layer coating of the psyllium husk is achieved by utilizing equipment (referred to herein as single pass fluidizing powder wetting apparatus) which operates preferably by dropping a dry blend psyllium-containing material through a highly turbulent annular zone formed by a cylindrical wall and a rotating shaft with variously pitched attached blades. An edible acid-containing solution is preferably sprayed into this zone to contact a dry psyllium-containing blend. The resulting coated, preferably agglomerated, psyllium husk is dropped to a fluid bed dryer where the added solvent is removed. An example of this equipment is the Bepex Turboflex Model No. TFX-4 (sold by Bepex Corporation; Minneapolis, Minnesota) with a six square foot bed vibrating fluid bed dryer (sold by Witte Corporation, Inc.; Washington, New Jersey).

The psyllium-containing blend preferably comprises from about 25% to about 100% of psyllium. Optional components for the psyllium-containing blend include, but are not limited to, edible acid, edible base, sweetening agents (preferably low calorie sweetening agents), coloring agents, agglomerating materials (especially maltodextrin), dietary fibers such as brans (e.g., wheat bran; oat bran; rice bran) and/or pharmaceutical agents (e.g., aspirin; non-steroidal antiinflammatories; sennosides). As noted hereinbefore, it is preferred that the psyllium-containing blend be dry, but it is possible to utilize suitable solvents (e.g., alcohols and/or water) if one is careful, especially if water is utilized, not to cause substantial hydration and swelling of the psyllium, since this is expected to adversely affect the rate at which psyllium husk can interact with water or other fluids.

The solution mixture preferably comprises one or more edible acids to be sprayed onto the psyllium-containing blend. This may be prepared by selecting a liquid (e.g., alcohol and/or water) as appropriate for the edible acid(s) being coated onto the psyllium husk. However, it is preferred that water be utilized. Preferred is also spraying the solution mixture onto a dry psyllium-containing blend. Preferably, when a spraying technique is used, the solution mixture is an aqueous solution comprising from about 0.5% to about 80% (preferably from about 5% to about 50%) of edible acid. It is also optionally possible to repeat the coating and drying steps, thereby building up a coating on the psyllium husk which comprises several thin layers of the edible acid. In addition, other optional materials may be present in the solution mixture, such as coloring agents, pharmaceutical agents, and mixtures thereof.

Other methods for preparing compositions according to the present invention include dry blending the ingredients and other means of multiple layer coating of the psyllium husk. The latter may be accomplished by using, for example, fluid bed agglomerating equipment such as the Fluid Air, Inc. Model 0300 Granulator-Dryer.

Further, it is to be recognized that while the preferred drink mix compositions of the present invention are unflavored, it is possible to include with such preferred compositions sweetening agents, preferred being low calorie sweetening agents including, but not limited to, aspartame, saccharin, cyclamate, acesulfame, and mixtures thereof. Further, it is possible to use the present compositions as unflavored base formulations to make flavored compositions by adding flavoring agents, especially when the flavoring system is such that it is not compatible (chemically or aesthetically) with an acidic composition.

### Method of Treatment

The compositions of the present invention are useful in a method for providing laxation and regulating bowel function for a human in need of such treatment. This method comprises administering to a human in need of such treatment a safe and effective amount of a psyllium-containing composition of the present invention. Ingestion of from about 2.5 grams to about 30 grams per day of the psyllium fiber in a composition according to the present invention is appropriate in most circumstances to produce laxation. However, this can vary with the size and condition of the patient, and such matters will, of course, be apparent to the attending physician. However, since the psyllium material is nontoxic, even higher ingestion levels can be used without undue side effects. A typical dose for laxation purposes involves administering from about 3 to about 15 grams of psyllium fiber in one dose.

The compositions of the present invention are further useful in methods for reducing serum cholesterol levels in humans. These methods comprise orally administering to a human in need of having a lowered blood cholesterol level a safe and effective amount of a psyllium-containing composition of the present invention. Ingestion of compositions of the present invention comprising amounts sufficient to administer from about 2.5 grams to about 30 grams per day of psyllium fiber, preferably from about 5 grams to about 15 grams, is appropriate in most circumstances. However, this can vary with the size and condition of the patient, and the patient's blood cholesterol level . Such matters will, of course, be apparent to the attending physician. However, since the psyllium material is nontoxic, even higher ingestion levels can be used without undue side effects, keeping in mind the materials herein have the hereinbefore noted laxative effect.

Treatment of the patient to reduce serum cholesterol levels comprises chronic ingestion in order to lower and maintain the lowered cholesterol levels. Daily ingestion is preferred, and a daily ingestion of from about 5 grams to about 15 grams of the psyllium fiber is most commonly used, with said ingestion preferably being at 2 or 3 regularly spaced intervals throughout the day. Again, depending on the patient's size and cholesterol level in the patient's blood, this can be varied.

The following examples further describe and demonstrate embodiments within the scope of the present invention.

### EXAMPLES

Drink mix compositions according to the present invention are prepared having the following components:

| Components | Example/Weight % | | | | | |
|---|---|---|---|---|---|---|
| | 1 | 2 | 3 | 4 | 5 | 6 |
| Psyllium⁽¹⁾ | 57.5 | 58.4 | 56.4 | 59.5 | 59.4 | 58.0 |
| Maltodextrin | 32.8 | 33.0 | 31.9 | 33.6 | 33.6 | 32.9 |
| Citric Acid | 3.7 | 3.2 | 3.1 | 3.3 | 3.3 | 3.7 |
| CaCO₃ | 5.9⁽²⁾ | 5.3 | 1.7 | - | - | - |
| Na₂CO₃ | - | - | - | - | - | 5.3 |
| K₂HPO₄ | - | - | 6.9 | - | - | - |
| KHCO₃ | - | - | - | 3.2 | 3.2 | - |
| Aspartame | 0.1 | 0.1 | - | 0.4 | 0.4 | 0.1 |
| Vanilla Flavor | - | - | - | - | 0.1 | - |

| | | | | | | |
|---|---|---|---|---|---|---|
| ⁽¹⁾ Psyllium husk, steam sanitized (95%+ purity); particle size of 100% smaller than 80 mesh U.S. Standard screen. | | | | | | |
| ⁽²⁾ 90% calcium carbonate agglomerated with 10% maltodextrin, supplied by J.W.S. Delavau Company, Inc., Philadelphia, PA. | | | | | | |

These compositions are prepared by first agglomerating the psyllium husk with the maltodextrin and citric acid by spraying a dry blend of the psyllium husk/maltodextrin with an aqueous solution of citric acid in a single pass fluidizing powder wetting apparatus followed by drying. This agglomerate is then dry blended with the remaining components. Compositions may also be prepared by using larger particle size psyllium husk and/or by substitution an equivalent amount of phosphoric acid for the citric acid in Example 1.

These compositions are readily mixable in water to provide a psyllium suspension having reduced gellation rate and are mixable in a variety of liquids for human consumption without unacceptably noticeable acid flavor impact. Consumption of a drink prepared by mixing 1 teaspoon of these compositions (about 5.5-6 grams) according to the present invention in 8 ounces of water provides effective laxation benefit to a patient in need of such benefit.

## Claims

1. A psyllium-containing drink mix composition comprising:
a) from 10% to 99% psyllium husk;
b) from 0% to 89% carrier materials which are selected from hydrolysed starch oligosaccharide, monosaccharide, disaccharide, polyglucose, polymaltose ad mixtures thereof;
c) from 0.5% to 25% edible acid; and
d) from 0.5% to 25% edible base at a level relative to the edible acid whereby the drink mix composition, when combined with water, has a pH of from 5.0 to 8.0.

2. The composition according to Claim 1 wherein the edible base is selected from sodium bicarbonate, sodium carbonate, potassium bicarbonate, potassium carbonate, calcium carbonate, sodium hydroxide, magnesium hydroxide, calcium hydroxide, aluminium hydroxide, dipotassium phosphate, magnesium oxide, magnesium carbonate and mixtures thereof.

3. The composition according to Claim 2 wherein the edible base is selected from sodium bicarbonate, sodium carbonate, potassium bicarbonate, potassium carbonate, calcium carbonate ad mixtures thereof.

4. The composition according to ay of Claims 1 - 3 comprising from 1% to 15%, preferably from 1% to 10% of the edible base.

5. The composition according to ay of Claims 1 - 4 wherein the edible acid is selected from citric acid, ascorbic acid, malic acid, succinic acid, tartaric acid, phosphoric acid, monopotassium phosphate, ad mixtures thereof.

6. The composition according to any of Claims 1 - 5 comprising from 2% to 10%, preferably from 2% to 5% of the edible acid.

7. The composition according to ay of Claims 1 - 6 comprising from 10% to 80%, preferably from 25% to 75% of the carrier materials.

8. The composition according to any of Claims 1 - 7 comprising from 20% to 90%, preferably from 25% to 75% of the psyllium husk.

9. The composition according to ay of Claims 1 - 8 wherein the psyllium husk comprises particle sizes distributed such that at least 90% is smaller than 45 mesh.

10. The composition according to any of Claims 1 - 9 wherein the psyllium husk comprises particle sizes distributed such that at least 80% is smaller than 60 mesh.

11. The composition according to any of Claims 1 - 10 wherein the edible base is present at a level relative to the edible acid whereby the drink mix composition, when combined with water, has a pH of from 5.5 to 7.0.

12. The composition according to any of Claims 1 - 11 comprising citric acid and calcium carbonate.

13. The composition according to any of Claims 1 - 12 whereby the composition does not comprise any flavoring agent.

## Patentansprüche

1. Eine Psyllium enthaltende Getränkemischungszusammensetzung, umfassend:
a) von 10 % bis 99 % Psylliumschale;
b) von 0 % bis 89 % Trägermaterialien, die unter hydrolysiertem Stärkeoligosaccharid, Monosaccharid, Disaccharid, Polyglucose, Polymaltose und Gemischen hievon ausgewählt sind;
c) von 0,5 % bis 25 % eßbare Säure; und
d) von 0,5 % bis 25 % eßbare Base, in einer solchen Menge, bezogen auf die eßbare Säure, daß die Getränkemischungszusammensetzung bei Kombination mit Wasser einen pH-Wert von 5,0 bis 8,0 aufweist.

2. Zusammensetzung nach Anspruch 1, worin die eßbare Base unter Natriumbicarbonat, Natriumcarbonat, Kaliumbicarbonat, Kaliumcarbonat, Calciumcarbonat, Natriumhydroxid, Magnesiumhydroxid, Calciumhydroxid, Aluminiumhydroxid, Dikaliumphosphat, Magnesiumoxid, Magnesiumcarbonat und Gemischen hievon ausgewählt ist.

3. Zusammensetzung nach Anspruch 2, worin die eßbare Base unter Natriumbicarbonat, Natriumcarbonat, Kaliumbicarbonat, Kaliumcarbonat, Calciumcarbonat und Gemischen hievon ausgewählt ist.

4. Zusammensetzung nach einem der Ansprüche 1-3, umfassend 1 % bis 15 %, vorzugsweise 1 % bis 10 % eßbare Base.

5. Zusammensetzung nach einem der Ansprüche 1-4, worin die eßbare Säure unter Zitronensäure, Ascorbinsäure, Apfelsäure, Bernsteinsäure, Phosphorsäure, Monokaliumphosphat und Gemischen hievon ausgewählt ist.

6. Zusammensetzung nach einem der Ansprüche 1-5, umfassend 2 % bis 10 %, vorzugsweise 2 % bis 5 % eßbare Säure.

7. Zusammensetzung nach einem der Ansprüche 1-6, umfassend 10 % bis 80 %, vorzugsweise 25 % bis 75 % Trägermaterialien.

8. Zusammensetzung nach einem der Ansprüche 1-7, umfassend 20 % bis 90 %, vorzugsweise 25 % bis 75 % Psylliumschale.

9. Zusammensetzung nach einem der Ansprüche 1-8, worin die Psylliumschale eine derartige Teilchengrößenverteilung aufweist, daß wenigstens 90 % kleiner als 45 Mesh sind.

10. Zusammensetzung nach einem der Ansprüche 1 bis 9, worin die Psylliumschale eine derartige Teilchengrößenverteilung aufweist, daß wenigstens 80 % kleiner als 60 Mesh sind.

11. Zusammensetzung nach einem der Ansprüche 1 bis 10, worin die eßbare Base in einer solchen Menge, bezogen auf die eßbare Säure, vorliegt, daß die Getränkemischungszusammensetzung bei Kombination mit Wasser einen pH-Wert von 5,5 bis 7,0 aufweist.

12. Zusammensetzung nach einem der Ansprüche 1 bis 11 mit einem Gehalt an Zitronensäure und Calciumcarbonat.

13. Zusammensetzung nach einem der Ansprüche 1 bis 12, worin die Zusammensetzung frei von jeglichem Aromamittel ist.

## Revendications

1. Composition de mélanges pour boisson contenant du psyllium comprenant:
a) de 10% à 99% d'écorce de psyllium;
b) de 0% à 89% de composés supports choisis parmi un oligosaccharide, monosaccharide, disaccharide, polyglucose, polymaltose d'amidon hydrolysé, et leurs mélanges;
c) de 0,5% à 25% d'acide comestible; et
d) de 0,5% à 25% de base comestible, dans une proportion, relative à l'acide comestible, caractérisée en ce que la composition de mélanges pour boisson, une fois combinée avec de l'eau, a un pH de 5,0 à 8,0.

2. Composition selon la revendication 1, caractérisée en ce que la base comestible est choisie parmi le bicarbonate de sodium, le carbonate de sodium, le bicarbonate de potassium, le carbonate de potassium, le carbonate de calcium, l'hydroxyde de sodium, l'hydroxyde de magnésium, l'hydroxyde de calcium, l'hydroxyde d'aluminium, le phosphate dipotassique, l'oxyde de magnésium, le carbonate de magnésium et leurs mélanges.

3. Composition selon la revendication 2, caractérisée en ce que la base comestible est choisie parmi le bicarbonate de sodium, le carbonate de sodium, le bicarbonate de potassium, le carbonate de potassium, le carbonate de calcium, et leurs mélanges.

4. Composition selon l'une quelconque des revendications 1 à 3, `comprenant de 1% à 15%, de préférence de 1% à 10%, de la base comestible.

5. Composition selon l'une quelconque des revendications 1 à 4, caractérisée en ce que l'acide comestible est choisi parmi l'acide citrique, l'acide ascorbique, l'acide malique, l'acide succinique, l'acide tartrique, l'acide phosphorique, le phosphate monopotassique, et leurs mélanges.

6. Composition selon l'une quelconque des revendications 1 à 5, comprenant de 2% à 10%, de préférence de 2% à 5%, de l'acide comestible.

7. Composition selon l'une quelconque des revendications 1 à 6, comprenant de 10% à 80%, de préférence de 25% à 75%, de composés supports.

8. Composition selon l'une quelconque des revendications 1 à 7, comprenant de 20% à 90%, de préférence de 25% à 75%, d'écorce de psyllium.

9. Composition selon l'une quelconque des revendications 1 à 8, caractérisée en ce que l'écorce de psyllium comprend des granulométries distribuées de telle sorte qu'au moins 90% des particules soient plus petites que 45 mesh.

10. Composition selon l'une quelconque des revendications 1 à 9, caractérisée en ce que l'écorce de psyllium comprend des granulométries distribuées de telle sorte qu'au moins 80% des particules soient plus petites que 60 mesh.

11. Composition selon l'une quelconque des revendications 1 à 10, caractérisée en ce que la base comestible est présente dans une proportion, relative à l'acide comestible, telle que la composition de mélanges pour boisson, une fois combinée avec de l'eau, ait un pH de 5,5 à 7,0.

12. Composition selon l'une quelconque des revendications 1 à 11, comprenant de l'acide citrique et du carbonate de calcium.

13. Composition selon l'une quelconque des revendications 1 à 12, caractérisée en ce que la composition ne comprend pas d'agent de sapidité.
